# EUROPEAN PATENT APPLICATION

(11) **EP 4 851 860 A1**
(43) Date of publication of application: **09.12.2026**
(21) Application number: 26175762.9
(22) Date of filing: 30.04.2026
(51) Int. Cl.: G06N 3/045, G06F 16/332, G06F 16/335, G06F 16/3329, G06N 5/045, H04L 41/16

(54) **SYSTEMS AND METHODS FOR USING NETWORK PROFILE DATA TO SEED NETWORK DETERMINATIONS**

(30) Priority: 02.05.2025 US 202519197901
(71) Applicant: Capital One Services, LLC, McLean, Virginia 22102 (US)
(72) Inventor: TURNER, Taylor, McLean, VA 22102 (US); RAFFERTY, Galen, McLean, VA 22102 (US); SHARPE, Samuel, McLean, VA 22102 (US); DAVIS, Michael, McLean, VA 22102 (US)
(74) Representative: Boult Wade Tennant LLP

(57) **Abstract**

Systems and methods for using non-natural language embeddings to generate natural language outputs with improved precision using categorized seeding. For example, the system may initiate a first session between a user and a first application, wherein the first session comprises a first input. The system may generate a seed, based on user profile data, that is aggregated prior to initiating the first session. The system may seed a first artificial intelligence model with the seed to generate a seeded artificial intelligence model. The system may input the first input into the seeded artificial intelligence model to generate a first output. The system may generate for display, on a user interface, a first recommendation from the seeded artificial intelligence model based on the first output.

## Description

### BACKGROUND

In recent years, the use of artificial intelligence, including, but not limited to, machine learning, deep learning, etc. (referred to collectively herein as artificial intelligence models, machine learning models, or simply models) has exponentially increased. Broadly described, artificial intelligence refers to a wide-ranging branch of computer science concerned with building smart machines capable of performing tasks that typically require human intelligence. Key benefits of artificial intelligence are its ability to process data, find underlying patterns, and/or perform real-time determinations. However, despite these benefits and despite the wide-ranging number of potential applications, practical implementations of artificial intelligence have been hindered by several technical problems. First, artificial intelligence may rely on large amounts of high-quality data. The process for obtaining this data and ensuring it is high-quality can be complex and time-consuming. Additionally, data that is obtained may need to be categorized and labeled accurately, which can be difficult, time-consuming and a manual task. Second, even with artificial intelligence models trained on large amounts of high-quality data, inputs for a given task (e.g., interpreting a user's intent) are often similar (e.g., use the same words), and thus result in the same outputs, even if the users have vastly different intents. The inability of artificial intelligence models to distinguish between different intents when receiving similar inputs presents an inherent problem with attempting to use an artificial intelligence-based solution in short messaging and/or dynamic response applications (e.g., chatbots).

### SUMMARY

Systems and methods are described herein for novel uses and/or improvements to seed artificial intelligence applications. As one example, systems and methods are described herein for overcoming the inability of artificial intelligence models to generate more precise outputs when the inputs are substantially the same. The systems and methods achieve this by using a more robust mechanism for distinguishing between inputs. More specifically, the systems and methods may use network profile data, user profile data, and/or natural language input to seed network determinations (e.g., recommendations, routing determinations, dynamic responses, etc.).

For example, using a natural language input (e.g., comprising network routing data, device information, and/or other raw text) into a model is technically more limiting, as compared to using an embedding, due to the inherent complexities and ambiguities associated with natural language processing. When a natural language input is provided, the system must match it to specific model tokens, which can be restrictive since each text input can only correlate with one set of tokens. This tokenization process can lead to a loss of nuanced meaning because each word or phrase in the text must be represented by discrete tokens, which may not fully capture the context or subtle variations in meaning. In contrast, embeddings offer a more sophisticated and precise representation of text. Embeddings are continuous vector representations that encapsulate semantic information from the text, allowing the model to work with a richer, more variable input. This reduces the need to rely on the exact words and their direct token matches, thus circumventing the limitations of token ambiguity and rigid text matching. By leveraging embeddings, models can better understand and process the underlying meaning of the input, enabling more accurate and flexible determinations and predictions.

However, the use of embeddings does create a novel technical problem when used as an input to generate real-time outputs. For example, embeddings, while powerful in capturing semantic information and reducing ambiguity, abstract away from the actual words and phrases of the input text. This abstraction means that the model operates on a level removed from the specific linguistic structures and vocabulary of natural language. When generating outputs, the model must translate these dense, multidimensional vector representations back into coherent and contextually appropriate language. This translation process is complex because embeddings do not retain the syntactic and grammatical details inherent in natural language inputs. Consequently, the model may struggle to reconstruct the precise wording and fluency required for natural language generation. Additionally, embeddings can lose the fine-grained distinctions between words that are crucial for producing accurate and contextually relevant responses. Thus, while embeddings enhance the model's understanding of semantic content, they introduce a layer of complexity in converting this understanding back into natural, human-readable text. This layer of complexity makes it difficult (e.g., in terms of time and processing requirements) to use embeddings in real-time applications such as network routing and/or dynamic response applications (e.g., chatbots).

To overcome the novel technical problem when using an embedding as an input to generate natural language inputs, the systems and methods instead seed a model with the embedding. Seeding a model with an embedding is different from using the embedding as an input in terms of the stage and purpose of their application within the model's processing pipeline. When an embedding is used as an input, it directly replaces the raw text input, serving as the starting point for the model's operations. This means that the model's layers and transformations begin with these dense, continuous vector representations, bypassing the need for initial tokenization and embedding generation. This approach can streamline certain processes, but also requires that the model be adept at handling and interpreting these pre-processed embeddings right from the outset (e.g., a difficult task for short messaging and/or dynamic response applications).

On the other hand, seeding a model with an embedding refers to initializing or providing a context for the model's subsequent operations. This seeding can set the stage for the model's behavior by embedding specific initial states or contextual information, influencing how the model processes subsequent inputs or generates outputs. In contrast to using embeddings as direct inputs, seeding integrates these embeddings at a more strategic point in the model's workflow, leveraging their semantic depth to shape the model's performance and outputs without replacing the initial text input phase entirely. This method allows for a blend of pre-processed semantic information and real-time natural language processing, enhancing the model's ability to produce contextually rich and coherent language.

Unfortunately, seeding a model raises yet another technical problem, specifically over seeding the model raises the same technical problems (e.g., over complexity) as using the embeddings as inputs. Limiting embeddings used to seed a model to only a limited number of categories or a predetermined type reduces the complexity faced by the model when generating outputs by narrowing the scope of the input information. By focusing on a predefined set of categories, the model can operate within a more structured and controlled environment. This restriction simplifies the range of possible interpretations and responses the model must consider, thereby enhancing its ability to generate accurate and relevant outputs. The model does not need to process and differentiate a vast and diverse array of semantic vectors, which can be computationally intensive and prone to ambiguity. Instead, it can concentrate on a smaller, well-defined set of embeddings, streamlining the generation process.

Additionally, using category designations for each seed helps prevent the model from having to disentangle information from different categories. When the embeddings are categorized, the model can easily recognize and process the information based on these predefined labels. This categorization acts as a guiding framework, ensuring that the model can quickly and accurately align the input embeddings with the appropriate contextual and semantic information required for generating outputs. It minimizes the risk of cross-category confusion, where the model might otherwise struggle to separate and correctly interpret overlapping or intertwined information from various categories. By clearly delineating the categories, the model can maintain a clear and organized representation of the input data, leading to more coherent and contextually appropriate outputs.

In some aspects, systems and methods for using non-natural language embeddings to generate natural language outputs with improved precision using categorized seeding are described. For example, the system may initiate a first session between a user and a first application, wherein the first session comprises a first input. The system may generate a seed based on user profile data that is aggregated prior to initiating the first session. The system may seed a first artificial intelligence model with the seed to generate a seeded artificial intelligence model. The system may input the first input into the seeded artificial intelligence model to generate a first output. The system may generate for display, on a user interface, a first recommendation from the seeded artificial intelligence model based on the first output.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" include plural referents unless the context clearly dictates otherwise. In addition, as used in the specification and the claims, the term, "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

FIG. 1A shows an illustrative diagram for generating explanations for network routing predictions, in accordance with one or more embodiments.
FIG. 1B shows an illustrative user interface for generating explanations for predictions used to determine dynamic conversational responses, in accordance with one or more embodiments.
FIG. 2A shows an illustrative diagram for generating explanations related to cyber security predictions, in accordance with one or more embodiments.
FIG. 2B shows an illustrative diagram for generating explanations related to generated recommendations, in accordance with one or more embodiments.
FIG. 3 shows illustrative components for a system for seeding artificial intelligence models, in accordance with one or more embodiments.
FIG. 4 shows a flowchart of the steps involved in using a seeded artificial intelligence model, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

Systems and methods instead seed a model with an embedding. This seeding can set the stage for the model's behavior by embedding specific initial states or contextual information, influencing how the model processes subsequent inputs or generates outputs. In contrast to using embeddings as direct inputs, seeding integrates these embeddings at a more strategic point in the model's workflow, leveraging their semantic depth to shape the model's performance and outputs without replacing the initial text input phase entirely. This method allows for a blend of pre-processed semantic information and real-time natural language processing, enhancing the model's ability to produce contextually rich and coherent language.

Unfortunately, over seeding the model raises the same technical problems (e.g., over complexity) as using the embeddings as inputs. Limiting embeddings used to seed a model to only a limited number of categories or a predetermined type reduces the complexity faced by the model when generating outputs by narrowing the scope of the input information. By focusing on a predefined set of categories, the model can operate within a more structured and controlled environment. This restriction simplifies the range of possible interpretations and responses the model must consider, thereby enhancing its ability to generate accurate and relevant outputs. The model does not need to process and differentiate a vast and diverse array of semantic vectors, which can be computationally intensive and prone to ambiguity. Instead, it can concentrate on a smaller, well-defined set of embeddings, streamlining the generation process.

To do so, the system and methods need to interpret the embeddings. Interpretability, or explainability, is a significant challenge in seeding artificial intelligence (AI) models because many advanced models, particularly deep learning networks, operate as "black boxes" with complex, non-linear decision-making processes that are difficult to dissect and understand. As AI systems grow in sophistication, they learn patterns from vast amounts of data without explicitly revealing how they arrive at their conclusions. This opacity creates difficulties in verifying the model's reliability, detecting biases, ensuring ethical compliance, and building user trust. In critical applications, such as healthcare, finance, and autonomous systems, the inability to interpret AI decisions can lead to serious consequences, making transparency essential for accountability and regulatory adherence. Additionally, without clear explanations, debugging and improving AI models become more challenging, potentially hindering innovation and responsible deployment. Addressing interpretability requires developing techniques that balance model complexity with transparency, ensuring AI systems remain both powerful and understandable.

Systems and methods are further described herein for novel uses and/or improvements to artificial intelligence applications, particularly in terms of interpretability of the artificial intelligence applications and/or the predictions provided by those application. As one example, systems and methods are described herein for increased interpretability in network routing decisions. As such, the systems and methods described herein may allow for embedding features based on the network to be used to describe the rationale for the predictions.

Existing systems may use embeddings from large deep learning models in downstream applications by leveraging these embeddings as additional features alongside traditional tabular features to enhance predictions. Embeddings are dense, low-dimensional representations of data, such as words or items, generated by deep learning models trained on large datasets. These embeddings capture complex relationships and semantic meanings that are often not apparent in raw data. In downstream applications, embeddings can be integrated with traditional tabular features, such as numerical or categorical data, to provide a richer and more informative feature set for predictive models. This integration typically involves concatenating the embeddings with the tabular features, forming a comprehensive feature vector that combines the strengths of both types of data. Machine learning algorithms, such as gradient boosting machines or neural networks, can then be trained on these enhanced feature vectors to make more accurate and robust predictions. By incorporating embeddings, models can capture underlying patterns and relationships within the data that traditional features alone might miss, leading to improved performance in various tasks, such as recommendation systems, customer segmentation, and predictive analytics. This approach allows for a more nuanced understanding of the data and can significantly boost the predictive power of artificial intelligence systems in complex real-world applications. Despite the benefits of embeddings, these systems do not have a mechanism for determining a meaning or definition of what each embedding feature represents. As such, for any application that requires interpretability, embeddings cannot be used.

To overcome these technical deficiencies in using embeddings for artificial intelligence models that require interpretability, the systems and methods disclosed herein use auxiliary features that are defined and engineered to explain embedding features. For example, the defined/engineered features may be human defined features. The system may then map these to the engineered features to the embedding features to gain a proxy to determine what the embedding features contain. As the engineered features are defined, these definitions may then be used to for interpreting/explaining the embedding feature to which they correspond. By doing so, embedding features may be leveraged as additional features alongside traditional tabular features to enhance predictions without negatively affecting the interpretability of the model.

As a result of this interpretability, the system may use category designations for each seed that helps prevent the model from having to disentangle information from different categories. When the embeddings are categorized, the model can easily recognize and process the information based on these predefined labels. This categorization acts as a guiding framework, ensuring that the model can quickly and accurately align the input embeddings with the appropriate contextual and semantic information required for generating outputs. It minimizes the risk of cross-category confusion, where the model might otherwise struggle to separate and correctly interpret overlapping or intertwined information from various categories. By clearly delineating the categories, the model can maintain a clear and organized representation of the input data, leading to more coherent and contextually appropriate outputs.

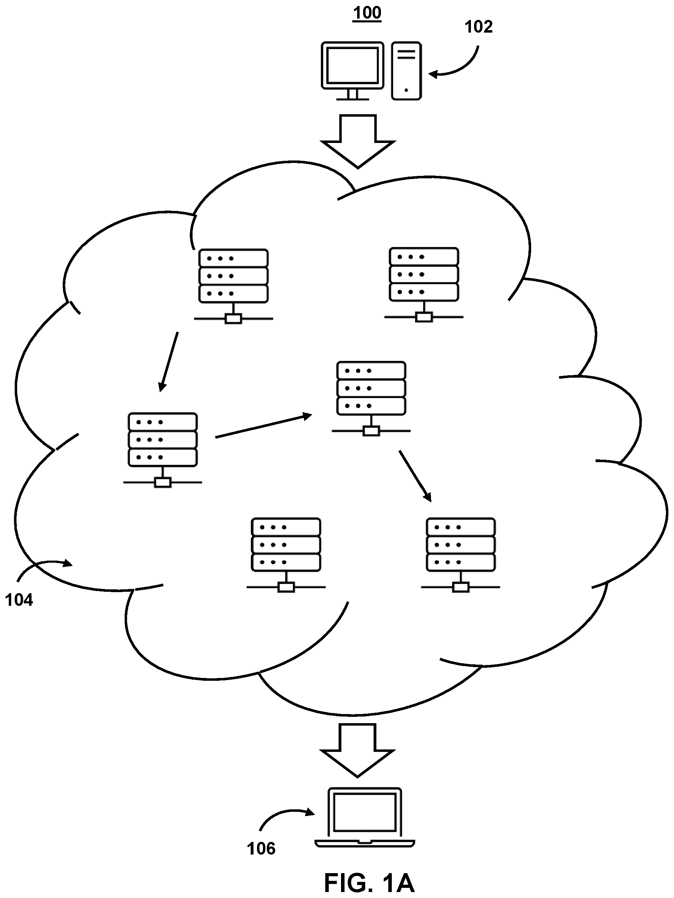

FIG. 1A shows an illustrative diagram for generating explanations for network routing predictions, in accordance with one or more embodiments. FIG. 1A shows system 100 that may be used to determine network routing for data from device 102 to device 106 across network 104. Device 102 and/or device 106 may include any computing component. In some instances, device 102 may include a user interface. As referred to herein, a "user interface" may comprise a human-computer interaction and communication in a device, and may include display screens, keyboards, a mouse, and the appearance of a desktop. For example, a user interface may comprise a way a user interacts with an application or a website.

For example, seeding an AI model for network routing can be highly beneficial as it enables dynamic, efficient, and adaptive decision-making in managing data traffic. Traditional routing algorithms often rely on static or predefined rules, which may not be optimal under varying network conditions, such as congestion, failures, or fluctuating bandwidth availability. By leveraging AI, a seeded model can continuously learn from historical and real-time data, predicting and adapting to network demands with minimal human intervention. This results in improved traffic management, reduced latency, optimized resource allocation, and enhanced fault tolerance. Additionally, AI-driven routing can detect and mitigate network anomalies or cyber threats by identifying patterns indicative of malicious activities.

As referred to herein, "content" should be understood to mean an electronically consumable user asset, such as Internet content (e.g., streaming content, downloadable content, Webcasts, etc.), video clips, audio, content information, pictures, rotating images, documents, playlists, websites, articles, books, electronic books, blogs, advertisements, chat sessions, social media content, applications, games, and/or any other media or multimedia and/or combination of the same. Content may be recorded, played, displayed, or accessed by user devices, but can also be part of a live performance. Furthermore, user generated content may include content created and/or consumed by a user. For example, user generated content may include content created by another, but consumed and/or published by the user.

Network 104 may include several essential components that work together to facilitate communication and resource sharing among devices. The primary components include network devices such as routers, switches, and hubs, which manage and direct the flow of data across the network. Routers are responsible for forwarding data packets between different networks, ensuring that information reaches its correct destination. Switches connect multiple devices within the same network, allowing them to communicate efficiently by directing data to the appropriate device. Hubs, although less common today, also connect multiple devices but broadcast data to all connected devices, leading to less efficient communication. Additionally, network 104 may include end devices, such as computers, servers, printers, and other peripherals that use the network to access and share resources. These devices are connected via network interfaces, which can be wired (using Ethernet cables) or wireless (using Wi-Fi). Network interfaces enable devices to communicate with each other and access the network infrastructure.

Communication protocols, such as TCP/IP (Transmission Control Protocol/Internet Protocol), may be used by network 104 to define the rules and standards for data transmission. These protocols ensure that data is formatted, transmitted, received, and processed correctly, enabling seamless communication between different devices and networks. Network media, including cables (such as fiber optic, coaxial, and twisted pair) and wireless signals, provide the physical means through which data travels. The choice of media impacts the speed, distance, and reliability of data transmission within network 104. Network services, such as DNS (Domain Name System) and DHCP (Dynamic Host Configuration Protocol), support the network's functionality by translating domain names into IP addresses and dynamically assigning IP addresses to devices, respectively. These services ensure that devices can easily locate and communicate with each other on network 104.

System 100 may use a model to make network routing predictions that optimize characteristics, such as bandwidth, throughput, power consumption, processing speed, reliability, and other performance metrics, by leveraging different machine learning training regimes, including supervised learning, unsupervised learning, and reinforcement learning.

System 100 may use different training regimes depending on the specific goals and available data. In supervised learning, the model is trained on labeled data, where each training example includes both the input network conditions and the desired optimal routing decisions. Historical network data, such as traffic patterns, node performance, and past routing decisions, serve as the primary source of training data. This data is labeled with performance metrics, indicating the effectiveness of different routing strategies. The AI model learns to map network conditions to optimal routing paths by minimizing the error between its predictions and the actual outcomes observed in the training data. Supervised learning is particularly effective when there is a rich dataset of historical performance metrics available.

Unsupervised learning does not rely on labeled data. Instead, it aims to uncover hidden patterns and relationships within the network data. For network routing, unsupervised learning can cluster network states or detect anomalies in traffic patterns. For instance, clustering algorithms can group similar network conditions, helping to identify typical routing scenarios and their associated performance characteristics. This information can inform routing decisions by highlighting common traffic behaviors and potential bottlenecks. Training data for unsupervised learning is usually generated from historical network logs, capturing a wide array of network conditions and traffic patterns without specific labels.

Reinforcement learning (RL) is particularly suited for dynamic and complex environments like network routing. In RL, an agent learns by interacting with the network environment, making routing decisions, and receiving feedback through rewards or penalties based on the resulting performance metrics. The agent aims to maximize cumulative rewards by learning optimal routing policies over time. Training data for RL is generated through simulations or real-time interactions, where the agent explores various routing strategies and observes their impact on network performance. Simulations can be used to create diverse scenarios, including rare or extreme conditions, ensuring the model can handle a wide range of network states.

For supervised learning, training data is generated from historical network logs, where past routing decisions and their outcomes provide a labeled dataset. In unsupervised learning, the same historical logs are used, but the focus is on identifying patterns and clusters within the data, rather than specific labels. For reinforcement learning, training data is often generated through a combination of real-time network interactions and simulated environments. Simulations allow the RL agent to experience a broad spectrum of network conditions, facilitating robust learning without the risk of disrupting live network operations.

By combining these training regimes, the model can develop a comprehensive understanding of the network and optimize routing decisions to enhance overall performance. Supervised learning provides precise mapping from conditions to decisions, unsupervised learning uncovers underlying patterns, and reinforcement learning adapts dynamically to real-time changes, ensuring the network operates efficiently and reliably.

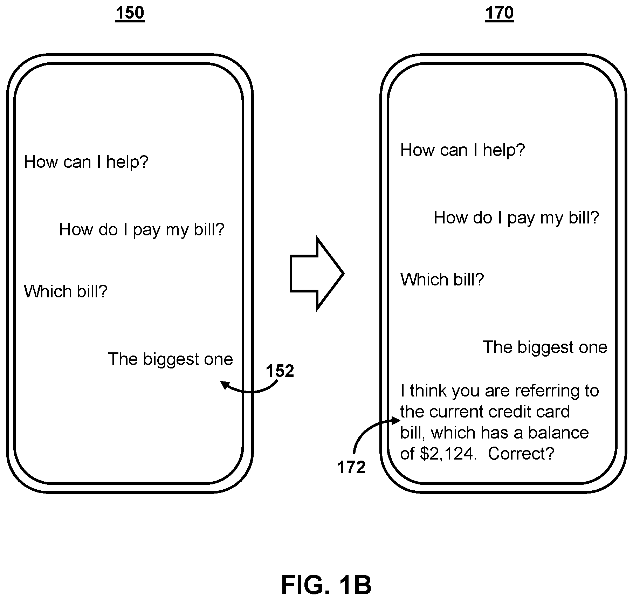

FIG. 1B shows an illustrative user interface for generating explanations for predictions used to determine dynamic conversational responses, in accordance with one or more embodiments. For example, user interface 150 may receive one or more user queries (e.g., user query 152) and generate a dynamic conversational response (e.g., response 172), as shown in user interface 170. Seeding an AI model for a chatbot can be highly beneficial, as it enables more natural, intelligent, and context-aware interactions with users. By training on a diverse dataset, a seeded AI model can understand language nuances, user intent, and conversational patterns, leading to more accurate and relevant responses. This enhances user experience by providing personalized assistance, reducing response times, and ensuring consistency in communication.

As described herein, a user query may be a request for information or action made by a user to a system, typically through a search engine, database, or any interactive application like a chatbot. The query represents the user's specific need or question and can be expressed in various forms, such as a keyword search, a natural language question, or a command. In the context of search engines, a user query might be a set of keywords, or a phrase entered into the search bar to find relevant information. For instance, a user might type "best Italian restaurants in New York" to get a list of recommendations. In databases, a user query often takes the form of a structured query language (SQL) statement designed to retrieve specific data from a database. For example, a query might be "SELECT * FROM employees WHERE department = 'Sales'". In interactive applications like chatbots, a user query could be a conversational prompt or question, such as "What is the weather today?" or "Can you help me book a flight to London?". The chatbot processes this input to provide an appropriate response or perform the requested action.

As described herein, a dynamic conversational response may be an adaptive and contextually relevant reply generated by a system, such as a chatbot or virtual assistant, in real-time based on the specific input provided by the user. Unlike static responses, which are pre-scripted and limited to specific prompts, dynamic responses may be generated on-the-fly and can handle a wide variety of user inputs with flexibility and coherence. For example, if a user asks a chatbot, "Can you recommend a good restaurant nearby?", a dynamic conversational response may consider the user's location, preferences, and possibly previous interactions to suggest a specific restaurant with a personalized recommendation. If the user follows up with "What type of cuisine do they offer?", the chatbot would maintain context and provide relevant information about the restaurant's menu.

In some embodiments, the system may generate for display, on a user interface, a first recommendation, based on the first output, by retrieving a plurality of recommendations and selecting the first recommendation from the plurality of recommendations based on the first output. The system may collect a diverse set of potential recommendations stored in a recommendation database or repository. Each recommendation in this repository is associated with specific criteria or conditions that dictate when it should be presented to a user. Once the system has generated an output, such as a prediction or classification result from a decision tree or another model, it uses this output to filter and evaluate the set of available recommendations. The system compares the output against the criteria associated with each recommendation. This involves checking if the conditions or thresholds defined for each recommendation are met by the output. For example, if the output indicates a high likelihood of user satisfaction with a certain feature, the system might look for recommendations that are tailored to enhancing user experience or promoting additional features. Conversely, if the output suggests potential dissatisfaction or a specific issue, the system will prioritize recommendations that address these concerns, such as offering support or alternative solutions. After evaluating the recommendations, the system selects the one that best aligns with the output. This selection process ensures that the chosen recommendation is the most relevant and beneficial for the user's current situation. The system then generates the selected recommendation in a format suitable for display on the user interface, crafting a clear and actionable message that the user can easily understand and interact with. Finally, the system displays the selected recommendation on the user interface, ensuring it is prominently positioned and user-friendly. Interactive elements, such as buttons or links, may be included to facilitate immediate user action based on the recommendation.

In some embodiments, the system may generate for display, on a user interface, a first recommendation, based on the first output, by retrieving a large language model and inputting the first output into the large language model. The process begins by retrieving the pre-trained large language model, which has been trained on extensive datasets to understand and generate human-like text. Once the model is loaded, the system inputs the first output into the LLM. This first output, which could be a prediction, classification result, or any other analytical output from a preceding process, serves as the prompt or context for generating a recommendation. The large language model processes the input, leveraging its deep understanding of language patterns and context to formulate a relevant and coherent recommendation. The LLM uses its embedded knowledge and the context provided by the first output to generate a recommendation that aligns with the user's needs or the system's goals. For instance, if the first output indicates a user's preference or a detected issue, the LLM can craft a recommendation that either enhances the user's experience or addresses the problem effectively. Once the LLM generates the recommendation, the system formats this recommendation into a user-friendly message suitable for display. This involves ensuring the recommendation is clear, concise, and actionable, allowing the user to understand and act upon it easily. The formatted recommendation is then displayed on the user interface, often accompanied by interactive elements, such as buttons or links that facilitate further actions. By using a large language model to generate recommendations based on the first output, the system can provide highly contextualized and nuanced suggestions that improve user engagement and satisfaction.

For example, as shown in FIG. 1B, the system may determine a context of a user query (e.g., query 152) to determine a personalized response (e.g., response 172). In some embodiments, the system may use user profile information to generate response 172 (e.g., user profile information that indicates an account balance). The system may monitor content generated by the user to generate user profile data. As referred to herein, "a user profile" and/or "user profile data" may comprise data actively and/or passively collected about a user. For example, the user profile data may comprise content generated by the user and a user characteristic for the user. A user profile may be content consumed and/or created by a user.

User profile data may also include a user characteristic. As referred to herein, "a user characteristic" may include about a user and/or information included in a directory of stored user settings, preferences, and information for the user. For example, a user profile may have the settings for the user's installed programs and operating system. In some embodiments, the user profile may be a visual display of personal data associated with a specific user, or a customized desktop environment. In some embodiments, the user profile may be digital representation of a person's identity. The data in the user profile may be generated based on the system actively or passively monitoring.

In some embodiments, the system may seed an artificial intelligence model with user profile data to generate better recommendations by collecting and analyzing relevant user attributes, preferences, and behavioral patterns. This process may involve gathering data, such as browsing history, purchase records, interactions, demographic details, and explicit user inputs, which serve as a foundation for the seeded model.

The system may use a model to generate dynamic conversational responses in a chatbot application by employing natural language processing (NLP) techniques and machine learning algorithms. The model, typically a neural network-based architecture like a transformer model (e.g., GPT-4), may be designed to understand and generate human-like text based on the context of the conversation. The model may process the input from the user, identifies the intent, and formulates a coherent and contextually appropriate response. This process involves several stages, including tokenization (breaking down the text into smaller units), understanding the semantic meaning, and generating a relevant response that maintains the flow of the conversation.

Training the model for such applications can be done using various regimes, including supervised learning, unsupervised learning, and reinforcement learning (as discussed above). In supervised learning, the model is trained on a large corpus of labeled conversational data, where each input is paired with a desired response. This data often comes from transcripts of real conversations, chat logs, or specially curated datasets that cover a wide range of conversational contexts. The model learns to predict the appropriate response based on the input text, gradually improving its accuracy by minimizing the difference between its predictions and the actual responses in the training data.

Unsupervised learning, on the other hand, does not rely on labeled data. Instead, it involves training the model on large amounts of text data without explicit input-response pairs. The model learns the structure and patterns of natural language through techniques like language modeling, where it predicts the next word or sequence of words in a sentence. This approach helps the model understand grammar, context, and common conversational patterns, making it more adept at generating plausible responses even in unfamiliar contexts.

Reinforcement learning can also be applied, where the model interacts with users in real-time and receives feedback on the quality of its responses. The feedback serves as a reward or penalty, guiding the model to refine its conversational strategies. For instance, positive feedback (such as user satisfaction or engagement metrics) encourages the model to generate similar responses in the future, while negative feedback helps it avoid unproductive or inappropriate responses. This approach enables the model to adapt and improve continuously based on actual user interactions.

To generate training data under these different regimes, a combination of real conversational data, simulated interactions, and data augmentation techniques is often used. Real conversational data provides authentic examples of human dialogue, while simulated interactions can create diverse scenarios to expose the model to various conversational contexts. Data augmentation techniques, such as paraphrasing and introducing linguistic variations, further enrich the training dataset, ensuring the model learns to handle a wide range of inputs. By integrating these training regimes, the AI model develops a robust understanding of natural language, enabling it to generate dynamic and contextually appropriate conversational responses in chatbot applications. This adaptability ensures that the chatbot can engage users effectively, providing relevant and meaningful interactions across diverse conversational scenarios.

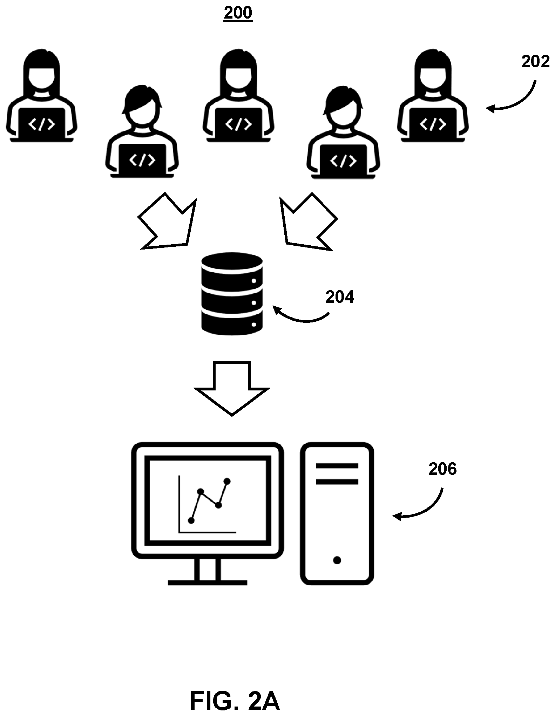

FIG. 2A shows an illustrative diagram for generating explanations related to cyber security predictions, in accordance with one or more embodiments. For example, as shown in FIG. 2A, system 200 may detect one or more cyber security incidents based on actions by one or more users (e.g., users 202). For example, the system may seed an artificial intelligence model with data related to cybersecurity incidents by collecting and analyzing historical and real-time security events, threat intelligence, and attack patterns. This data may include logs from intrusion detection systems, firewall alerts, malware signatures, phishing reports, and user behavior analytics. By processing and structuring this information, the AI model learns to recognize anomalies, correlate attack vectors, and classify incidents based on severity and type.

In some examples, cybersecurity incidents that may be detected using a model may include a wide range of malicious activities and anomalies. These can encompass phishing attacks, where the model can identify suspicious emails that attempt to deceive employees into divulging sensitive information. The model may also detect malware by recognizing unusual patterns of behavior or code within software applications. Additionally, the model may identify brute force attacks by spotting numerous failed login attempts within a short timeframe. Advanced persistent threats (APTs), which involve prolonged and targeted cyber-attacks, can also be detected by the model by monitoring for subtle and persistent anomalies in network traffic and system behavior. For example, a model may receive user activity (e.g., at server 204) and may analyze the data for anomalies in network traffic and system behavior.

The model may analyze large volumes of data in real-time, making it particularly effective at identifying these and other threats, such as data breaches, insider threats, and distributed denial-of-service (DDoS) attacks, by recognizing patterns that deviate from the norm. In some embodiments, the system may detect cyber security incidents at financial services companies. One common threat is fraud, where attackers use stolen credentials or synthetic identities to make unauthorized transactions or access sensitive financial information. Phishing schemes are also prevalent, targeting both employees and customers to steal personal information or distribute malware. Additionally, ransomware attacks pose a significant risk, where malicious software encrypts company data, demanding a ransom for its release. Financial institutions are also vulnerable to sophisticated attacks such as APTs, where cybercriminals infiltrate the network and remain undetected for extended periods, extracting valuable data. Insider threats, whether from malicious intent or accidental negligence, can also lead to significant security breaches. Furthermore, DDoS attacks can disrupt services by overwhelming the company's servers with traffic, leading to downtime and potential financial loss. AI models help mitigate these risks by continuously monitoring for unusual activities, analyzing vast amounts of data for threats, and providing early warnings of potential security incidents, thereby enhancing the company's overall security posture. By analyzing patterns in user activity, the system may generate one or more recommendations that may be shown on user device 206.

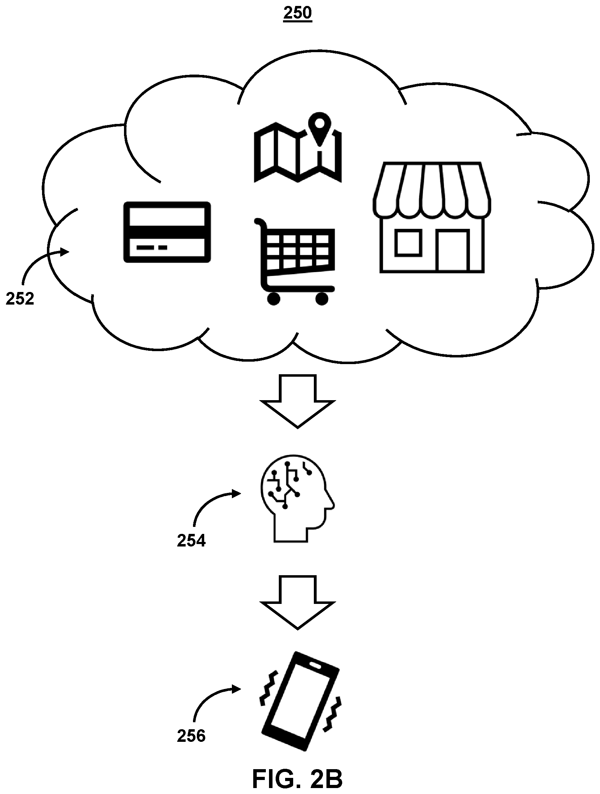

FIG. 2B shows an illustrative diagram for generating explanations related to generated recommendations, in accordance with one or more embodiments. For example, system 250 may generate recommendations based on user activity using model 254 to generate recommendation on a user device (e.g., device 256).

System 250 may generate recommendations by utilizing algorithms and data analysis techniques to suggest items, services, or content that align with the user's preferences and behavior. The process typically begins with data collection, where the system gathers information on user interactions (e.g., data 252), such as browsing history, purchase history, location, merchant information, ratings, and/or demographic data. This data is then processed and analyzed using various recommendation algorithms, which can be broadly categorized into collaborative filtering, content-based filtering, and hybrid methods.

System 250 may use collaborative filtering to determine users who have shown similar behavior in the past may have similar preferences in the future. It identifies patterns and similarities between users and items to make recommendations. For instance, if user A and user B have both liked similar books, and user A reads a new book, the system might recommend this book to user B.

System 250 may use content-based filtering to determine the attributes of items and users' past preferences. System 250 may recommend items that are similar to those the user has shown interest in before. For example, if a user frequently watches sci-fi movies, the system will recommend new sci-fi movies by analyzing the characteristics of previously liked movies.

System 250 may use hybrid methods that combine both collaborative and content-based approaches to leverage the strengths of each. For example, system 250 may adjust recommendations based on a wider range of data and offer more accurate suggestions. The recommendations are then presented to the user through the interface, often prioritized or personalized based on the most relevant or popular items. The system continuously updates its models with new data to improve the accuracy and relevance of future recommendations, ensuring that the suggestions evolve with the user's changing preferences and behaviors.

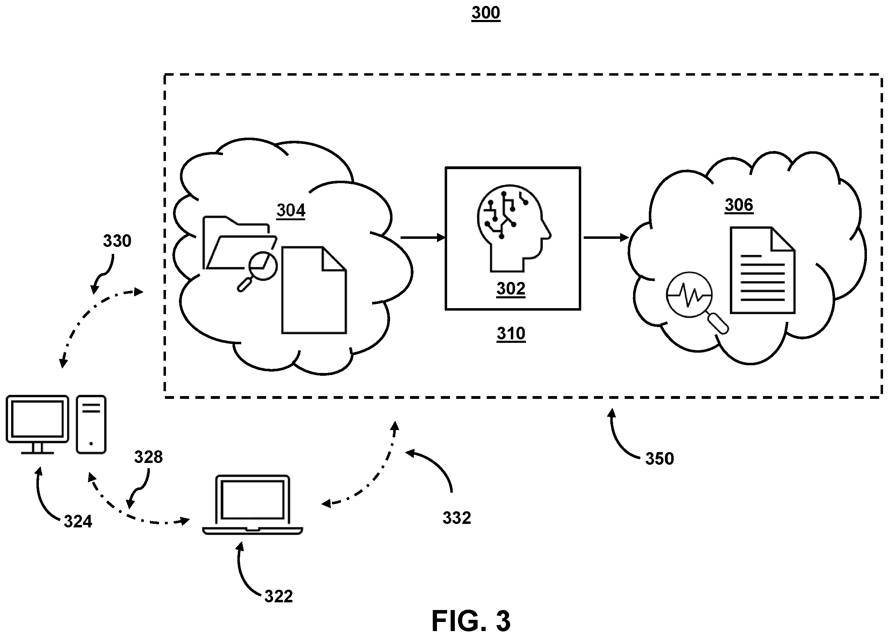

FIG. 3 shows illustrative components for a system for seeding artificial intelligence models, in accordance with one or more embodiments. For example, FIG. 3 may show illustrative components for determining interpretable network routing decisions using embeddings for artificial intelligence models. Additionally, or alternatively, FIG. 3 may show illustrative components for using embeddings for artificial intelligence models that require interpretability (e.g., for user recommendation, fraud determinations, marketing success determinations, etc.). As shown in FIG. 3, system 300 may include mobile device 322 and user terminal 324. While shown as a smartphone and personal computer, respectively, in FIG. 3, it should be noted that mobile device 322 and user terminal 324 may be any computing device, including, but not limited to, a laptop computer, a tablet computer, a hand-held computer, and other computer equipment (e.g., a server), including "smart," wireless, wearable, and/or mobile devices. FIG. 3 also includes cloud components 310. Cloud components 310 may, alternatively, be any computing device as described above, and may include any type of mobile terminal, fixed terminal, or other device. For example, cloud components 310 may be implemented as a cloud computing system and may feature one or more component devices. It should also be noted that system 300 is not limited to three devices. Users may, for instance, utilize one or more devices to interact with one another, one or more servers, or other components of system 300. It should be noted, that, while one or more operations are described herein as being performed by particular components of system 300, these operations may, in some embodiments, be performed by other components of system 300. As an example, while one or more operations are described herein as being performed by components of mobile device 322, these operations may, in some embodiments, be performed by components of cloud components 310. In some embodiments, the various computers and systems described herein may include one or more computing devices that are programmed to perform the described functions. Additionally, or alternatively, multiple users may interact with system 300 and/or one or more components of system 300. For example, in one embodiment, a first user and a second user may interact with system 300 using two different components.

With respect to the components of mobile device 322, user terminal 324, and cloud components 310, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or input/output circuitry. Each of these devices may also include a user input interface and/or user output interface (e.g., a display) for use in receiving and displaying data. For example, as shown in FIG. 3, both mobile device 322 and user terminal 324 include a display upon which to display data (e.g., conversational response, queries, and/or notifications).

Additionally, as mobile device 322 and user terminal 324 are shown as touchscreen smartphones, these displays also act as user input interfaces. It should be noted that in some embodiments, the devices may have neither user input interfaces nor displays and may instead receive and display content using another device (e.g., a dedicated display device, such as a computer screen, and/or a dedicated input device such as a remote control, mouse, voice input, etc.). Additionally, the devices in system 300 may run an application (or another suitable program). The application may cause the processors and/or control circuitry to perform operations related to generating dynamic conversational replies, queries, and/or notifications.

Each of these devices may also include electronic storages. The electronic storages may include non-transitory storage media that electronically stores information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

FIG. 3 also includes communication paths 328, 330, and 332. Communication paths 328, 330, and 332 may include the Internet, a mobile phone network, a mobile voice or data network (e.g., a 5G or LTE network), a cable network, a public switched telephone network, or other types of communications networks or combinations of communications networks. Communication paths 328, 330, and 332 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Cloud components 310 may include model 302, which may be a machine learning model, artificial intelligence model, etc. (which may be referred collectively as "models" herein). In recent years, the use of artificial intelligence, including, but not limited to, machine learning, deep learning, etc. (referred to collectively herein as artificial intelligence models, machine learning models, or simply models) has exponentially increased. Broadly described, artificial intelligence refers to a wide-ranging branch of computer science concerned with building smart machines capable of performing tasks that typically require human intelligence. Key benefits of artificial intelligence are its ability to process data, find underlying patterns, and/or perform real-time determinations. However, despite these benefits and despite the wide-ranging number of potential applications, practical implementations of artificial intelligence have been hindered by several technical problems. First, artificial intelligence may rely on large amounts of high-quality data. The process for obtaining this data and ensuring it is high-quality can be complex and time-consuming. Additionally, data that is obtained may need to be categorized and labeled accurately, which can be difficult, time-consuming and a manual task. Second, despite the mainstream popularity of artificial intelligence, practical implementations of artificial intelligence may require specialized knowledge to design, program, and integrate artificial intelligence-based solutions, which can limit the amount of people and resources available to create these practical implementations. Finally, results based on artificial intelligence can be difficult to review, as the process by which the results are made may be unknown or obscured. This obscurity can create hurdles for identifying errors in the results, as well as improving the models providing the results.

Model 302 may take inputs 304 and provide outputs 306. The inputs may include multiple datasets, such as a training dataset and a test dataset. Each of the plurality of datasets (e.g., inputs 304) may include data subsets related to user data, predicted forecasts and/or errors, and/or actual forecasts and/or errors. In some embodiments, outputs 306 may be fed back to model 302 as input to train model 302 (e.g., alone or in conjunction with user indications of the accuracy of outputs 306, labels associated with the inputs, or with other reference feedback information). For example, the system may receive a first labeled feature input, wherein the first labeled feature input is labeled with a known prediction for the first labeled feature input. The system may then train the first machine learning model to classify the first labeled feature input with the known prediction (e.g., an embedding, a labeled embedding, a mapping, respective human-definable descriptions, etc.).

In a variety of embodiments, model 302 may update its configurations (e.g., weights, biases, or other parameters) based on the assessment of its prediction (e.g., outputs 306) and reference feedback information (e.g., user indication of accuracy, reference labels, or other information). In a variety of embodiments, where model 302 is a neural network, connection weights may be adjusted to reconcile differences between the neural network's prediction and reference feedback. In a further use case, one or more neurons (or nodes) of the neural network may require that their respective errors are sent backward through the neural network to facilitate the update process (e.g., backpropagation of error). Updates to the connection weights may, for example, be reflective of the magnitude of error propagated backward after a forward pass has been completed. In this way, for example, the model 302 may be trained to generate better predictions.

In some embodiments, model 302 may include an artificial neural network. In such embodiments, model 302 may include an input layer and one or more hidden layers. Each neural unit of model 302 may be connected with many other neural units of model 302. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function, such that the signal must surpass it before it propagates to other neural units. Model 302 may be self-learning and trained, rather than explicitly programmed, and can perform significantly better in certain areas of problem solving, as compared to traditional computer programs. During training, an output layer of model 302 may correspond to a classification of model 302, and an input known to correspond to that classification may be input into an input layer of model 302 during training. During testing, an input without a known classification may be input into the input layer, and a determined classification may be output.

In some embodiments, model 302 may include multiple layers (e.g., where a signal path traverses from front layers to back layers). In some embodiments, back propagation techniques may be utilized by model 302 where forward stimulation is used to reset weights on the "front" neural units. In some embodiments, stimulation and inhibition for model 302 may be more free flowing, with connections interacting in a more chaotic and complex fashion. During testing, an output layer of model 302 may indicate whether or not a given input corresponds to a classification of model 302 (e.g., an embedding, a labeled embedding, a mapping, respective human-definable descriptions, etc.).

In some embodiments, the model (e.g., model 302) may automatically perform actions based on outputs 306. In some embodiments, the model (e.g., model 302) may not perform any actions. The output of the model (e.g., model 302) may be used to determine an embedding, a labeled embedding, a mapping, respective human-definable descriptions, etc.

In some embodiments, the system may generate predictions related to financial services. For example, the system may use one or more models and/or application to process a variety of data to generate predictions for tasks, such as payment card eligibility determinations, fraud detection, and/or determining rates for auto-finance applications. For credit card eligibility, the model may use data such as the applicant's credit score, income, employment history, debt-to-income ratio, and past credit history. This data helps the model predict the likelihood of the applicant repaying the credit card debt. For fraud detection, models analyze transaction data, including the amount, location, frequency, and pattern of transactions. They compare these patterns to known fraudulent behavior to identify potentially fraudulent activities. For determining auto-finance rates, models might use the applicant's credit score, loan amount, loan term, vehicle details, and market interest rates. The data used by these models comes from various sources, including credit bureaus, financial institutions, customer-provided information, transaction records, and public records. By analyzing these data points, models can make informed predictions and decisions that help financial institutions manage risk, provide appropriate services, and enhance customer satisfaction.

In some embodiments, the model may process received data through several stages. For example, the model may collect and aggregate data from various sources (e.g., a user account, industry data, third-party data sources, etc.). The system may ensure the data is cleaned and preprocessed to handle any missing and/or inconsistent information. This preprocessing may include normalizing numerical data, encoding categorical variables, and applying techniques to handle outliers. The model may then use feature engineering to identify and create relevant features that can improve its predictive power. For instance, the system may derive new variables from existing ones, such as calculating the debt-to-income ratio from debt and income data.

Once the data is prepared, the system feeds the data into the model, which could be an artificial intelligence algorithm, such as logistic regression, decision trees, and/or neural networks. The model may be trained on historical data, learning patterns, and/or relationships between input features and the target outcomes. During this training process, the system may adjust the model parameters to minimize prediction errors. After training, the system may validate the model and test the model using separate data sets to ensure the model has a predetermined and/or threshold accuracy and generalizability.

In some embodiments, the system may use specialized predictions based on the task. Additionally, or alternatively, the system may adjust the inputs and/or outputs based on the determinations and/or predictions required. For example, for credit card eligibility, the model may evaluate the applicant's likelihood of defaulting on payments. In fraud detection, the model may identify anomalies and patterns indicative of fraudulent behavior. In auto-finance rate determination, the model may predict the risk associated with lending to an individual and adjusts the interest rates accordingly. In some embodiments, the entire process may be iterative, with models continually updated and refined as new data becomes available, ensuring they remain effective in making accurate and reliable predictions.

In some embodiments, model 302 may be a deep learning model. Training a deep learning model to generate recommendations involves several stages, each crucial for ensuring the model's effectiveness and accuracy. Initially, the system gathers and preprocesses a large dataset containing user interactions, preferences, ratings, and other relevant features. This data is then divided into training, validation, and test sets. The training set is used to teach the model, the validation set helps tune hyperparameters and prevent overfitting, and the test set evaluates the model's performance on unseen data.

The deep learning model, often a neural network, is then designed to fit the recommendation task. Common architectures include collaborative filtering models, like matrix factorization enhanced with neural networks, and content-based models, which use user and item features. In some cases, hybrid models combining both approaches are employed. The model's architecture typically consists of multiple layers, including embedding layers that transform user and item identifiers into dense vectors, and hidden layers that capture complex interactions between users and items.

During training, the model learns to predict user preferences by minimizing a loss function, such as mean squared error for ratings prediction or binary cross-entropy for implicit feedback scenarios. Optimization algorithms like stochastic gradient descent (SGD) or its variants are used to update the model's weights iteratively. Throughout training, techniques like dropout and regularization may be applied to prevent overfitting and improve generalization.

Once trained, the model can generate recommendations by predicting the relevance of items for each user. For a given user, the model processes their historical interactions and preferences to output a ranked list of items most likely to be of interest. This involves feeding the user's data into the model, which then computes scores for all possible items. The top-scoring items are selected as recommendations.

The system can further enhance recommendations through techniques like real-time updating, where the model continuously learns from new user interactions, and incorporating additional context, such as temporal dynamics or user intent. Finally, the recommendations are presented to the user through an interface, often accompanied by explanations or personalized messages to enhance user engagement and satisfaction. This entire process ensures that the deep learning model effectively learns from data to provide accurate and personalized recommendations.

System 300 also includes API layer 350. API layer 350 may allow the system to generate summaries across different devices. In some embodiments, API layer 350 may be implemented on mobile device 322 or user terminal 324. Alternatively, or additionally, API layer 350 may reside on one or more of cloud components 310. API layer 350 (which may be A REST or Web services API layer) may provide a decoupled interface to data and/or functionality of one or more applications. API layer 350 may provide a common, language-agnostic way of interacting with an application. Web services APIs offers a well-defined contract, called WSDL, that describes the services in terms of its operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in B2B transactions.

API layer 350 may use various architectural arrangements. For example, system 300 may be partially based on API layer 350, such that there is strong adoption of SOAP and RESTful Web-services, using resources like Service Repository and Developer Portal, but with low governance, standardization, and separation of concerns. Alternatively, system 300 may be fully based on API layer 350, such that separation of concerns between layers like API layer 350, services, and applications are in place.

In some embodiments, the system architecture may use a microservice approach. Such systems may use two types of layers: Front-End Layer and Back-End Layer where microservices reside. In this kind of architecture, the role of the API layer 350 may provide integration between Front-End and Back-End. In such cases, API layer 350 may use RESTful APIs (exposition to front-end or even communication between microservices). API layer 350 may use AMQP (e.g., Kafka, RabbitMQ, etc.). API layer 350 may use incipient usage of new communications protocols such as gRPC, Thrift, etc.

In some embodiments, the system architecture may use an open API approach. In such cases, API layer 350 may use commercial or open-source API Platforms and their modules. API layer 350 may use a developer portal. API layer 350 may use strong security constraints applying WAF and DDoS protection, and API layer 350 may use RESTful APIs as standard for external integration.

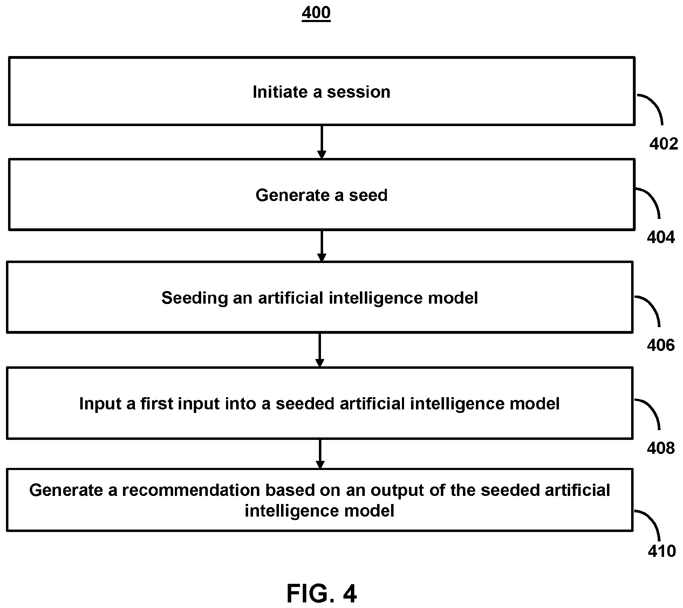

FIG. 4 shows a flowchart of the steps involved in using a seeded artificial intelligence model, in accordance with one or more embodiments. For example, the system may use process 400 (e.g., as implemented on one or more system components described above) in order to determine interpretable network routing decisions using embeddings for artificial intelligence models. In another example, process 400 may describe using non-natural language embeddings to generate natural language outputs with improved precision using categorized seeding. For example, process 400 may describe the process through which the system determines a proxy set of embeddings (e.g., a seed) to seed an artificial intelligence model to generate a recommendation for a first set of embeddings (e.g., that was previously not interpretable). The system may use the proxy set of embeddings (e.g., a seed) to generate a first output from a seeded model that is both interpretable and more precise.

At step 402, process 400 (e.g., using one or more components described above) may initiate a session. For example, the system may initiate a first session between a user and a first application, wherein the first session comprises a first input. The system may system initiate a session, such as a user or device session, by establishing a connection between an entity (e.g., a user, application, or device) and a platform or service. This process may begin when a user interacts with an application, such as logging in, sending a request, or performing an action that triggers the system to create a session instance. The session is assigned, by the system, a unique identifier and may include metadata such as timestamps, authentication tokens, user credentials, or device-specific information to track interactions. In the case of a user session, the system may authenticate the user via credentials, biometrics, or multi-factor authentication before granting access. Similarly, a device session may involve verifying device identity, network permissions, or security protocols. Throughout the session, the system maintains state information, allowing for seamless interaction and continuity. The session persists until a termination condition is met, such as user logout, session timeout, or an explicit session closure by the system. By managing sessions effectively, the system ensures secure, efficient, and personalized user experiences, while maintaining security and resource optimization.

At step 404, process 400 (e.g., using one or more components described above) generates a seed. For example, the system may generate a seed based on user profile data that is aggregated prior to initiating the first session. The system may generate the seed for a model by collecting and processing relevant data that serves as the foundation for the model's initial training or adaptation. This seed can be derived from aggregated user profile data, historical interactions, or other contextual information prior to initiating a session. The system may first gather data points, such as user preferences, behavior patterns, demographic information, or past engagement history, ensuring that the seed reflects meaningful insights. Once collected, the data is preprocessed-cleaned, structured, and transformed into a format suitable for AI model training. The system then uses this seed data to initialize the model's parameters, influencing its ability to make accurate predictions or personalized recommendations from the start. By leveraging a well-formed seed, the AI model can generate more relevant outputs, reducing the need for extensive retraining and improving its performance from the initial session onward.

In some embodiments, the system may receive user profile data of a user interacting with a first computer terminal. The system receives user profile data, network profile data, and/or other profile data of a user interacting with a first computer terminal or data processing request across a computer network through various mechanisms designed to capture and transmit relevant information. For example, when a user interacts with a computer terminal, such as logging into a service, browsing a website, or using an application, the system collects profile data, which can include personal information, preferences, usage patterns, and behavior. This data is typically gathered through forms, cookies, tracking scripts, and user input, and is stored in databases associated with the service or application. In addition to user profile data, network profile data is collected to understand the context of the user's interactions. This includes information about the user's device, IP address, network conditions, geolocation, and other metadata related to the network connection. When a user initiates a data processing request, such as submitting a query, downloading a file, or accessing cloud services, the system captures this network profile data through network monitoring tools, logging mechanisms, and API interactions. The collected data is transmitted over the network to a central server or a cloud-based system, where it is processed and analyzed. Secure transmission protocols, such as HTTPS, are often used to ensure the privacy and security of the data during transit. Once the data reaches the server, it is typically aggregated, stored in a structured format, and analyzed using various data processing techniques. This analysis can include machine learning algorithms, statistical methods, and pattern recognition techniques to derive insights, personalize user experiences, optimize network performance, and enhance security measures.

In some embodiments, the system may generate a seed based on a labeled set of embeddings. The system may take the labeled dataset, where each data point is represented by an embedding vector and associated with a label. These embeddings are typically precomputed representations of the data, capturing semantic information in a dense, continuous vector space. To prepare the input for the model, the system first organizes the embeddings and their corresponding labels into a suitable format. This often involves creating two separate structures: a feature matrix X and a label vector y. The feature matrix X is an m×d matrix, where m is the number of data points and d is the dimensionality of the embeddings. Each row in X corresponds to an embedding vector, while the label vector y is an m-dimensional vector containing the labels for each data point. The system ensures that the data is properly shuffled and split into training, validation, and test sets to evaluate the model's performance. Shuffling helps in ensuring that the model learns a generalizable pattern rather than overfitting to a specific order of data points. The training set is used to train the model, the validation set helps tune hyperparameters and prevent overfitting, and the test set is used to assess the model's performance on unseen data.

Once the data is organized, the system feeds the feature matrix X and label vector y into the model. If the model is a neural network, the embeddings may be directly fed into the input layer. The model processes these embeddings through its architecture, which could include multiple hidden layers, activation functions, and dropout layers, to learn patterns and make predictions. During training, the model iteratively updates its weights to minimize a loss function, such as categorical cross-entropy for classification tasks or mean squared error for regression tasks, using optimization algorithms like stochastic gradient descent (SGD). After training, the model uses the learned patterns to make predictions on new, unseen embeddings. The system can take a new embedding vector, pass it through the trained model, and obtain a prediction, which could be a class label, a score, or any other relevant output depending on the task. This process ensures that the model effectively utilizes the labeled set of embeddings to learn and make accurate predictions.

In some embodiments, the system may determine the first size of the first set of embeddings, which refers to the dimensionality or the number of features in each embedding vector within that set. This size is typically influenced by the nature of the data and the embedding method used, such as the dimensionality chosen in Word2Vec or the output size of an autoencoder. Once the first size is established, the system proceeds to determine the second size of the second set of embeddings. This second size is often dependent on the first size to maintain compatibility and coherence between the two sets. The system considers several factors in determining this second size, including the complexity of the data, the specific task requirements, and the need to balance performance with computational efficiency. If the second set of embeddings is intended to represent the same type of data but in a different context or after further transformation, the system may choose to maintain the same dimensionality as the first set to ensure a straightforward mapping or alignment.

If the second set of embeddings serves a different purpose or needs to capture more or less information, the system may adjust the size accordingly. For instance, if the second set needs to represent higher-level abstractions or reduce dimensionality for efficiency, the system might choose a smaller size. Conversely, if the second set needs to capture more detailed information or additional features, the system might increase the size. The final decision on the second size is made to optimize the model's ability to perform its intended function, whether that involves prediction, classification, or another task. For example, the system may select a large number of human/defined/engineered embeddings. The system may need to accumulate a threshold amount of data for various categories. The system may need values for the user, activity, etc. The more engineered features, the higher the likelihood that the mapping will map one of the engineered features to an embedding (and do so correctly). For example, the system may select the number and/or size of the labeled embeddings based on the amount (or size) of the profile data, a user input, etc.

In some embodiments, the labeled set of embeddings are generated by retrieving a first artificial intelligence model. The first artificial intelligence model may be a deep learning model. The deep learning model is trained on a first training data set to generate a first set of embeddings, wherein the first training data set. The training data set may comprise historic user data that is generated based on monitoring data processing requests across a plurality of computer networks. The first training data set may comprise historic network traffic data that is generated based on monitoring data processing requests across a plurality of computer networks.

In some embodiments, the system may retrieve a second set of embeddings, wherein each embedding in the second set of embeddings is labeled to correspond to one or more respective human-definable descriptions. For example, the one or more respective human-definable descriptions correspond to known network issues, known user profile data categories, etc. For example, the system assigns labels to each embedding based on human-definable descriptions. This labeling process involves mapping each embedding to one or more descriptions that are meaningful and interpretable by humans. For example, embeddings representing network issues might be labeled with categories like "latency problems," "connection drops," or "high traffic," while embeddings for user profile data could be labeled with categories such as "frequent traveler," "tech enthusiast," or "online shopper." This mapping can be done manually by domain experts or through automated classification algorithms if there is a predefined set of descriptions.

The labeled embeddings are then organized into a structured dataset, where each embedding vector is associated with its corresponding human-definable description(s). This dataset can be used for various downstream tasks, such as training machine learning models, clustering, or anomaly detection. The labels provide interpretability to the embeddings, enabling users to understand the underlying patterns and relationships captured by the embeddings in terms of familiar and meaningful categories. The system continuously updates and refines the embeddings, and their labels as new data becomes available. This ensures that the embeddings remain relevant and accurate, reflecting any changes or new insights in the data. By generating a labeled set of embeddings, the system creates a powerful tool for analyzing complex data and making it accessible and interpretable through human-definable descriptions.

In some embodiments, the system may map the first set of embeddings to the second set of embeddings. For example, the system may use a mapping function that translates the first set of embeddings into the second set. This mapping can be learned through a supervised learning approach, if there is a labeled dataset that provides correspondences between the two sets of embeddings. For example, suppose the first set of embeddings represents raw user interactions, and the second set represents predefined user categories like "frequent traveler" or "tech enthusiast." In that case, the system can use a labeled dataset, where each user interaction embedding is associated with one or more user category embeddings. The system may train a neural network or another machine learning model on this labeled dataset to learn the mapping function. The model takes embeddings from the first set as input and outputs embeddings in the second set. During training, the model minimizes a loss function that measures the difference between the predicted second set embeddings and the actual embeddings, thus learning to transform the inputs appropriately. Once trained, the model can map new embeddings from the first set to the second set effectively. This involves feeding new embeddings into the trained model, which processes them through its learned layers to output the corresponding second set embeddings. The result is a transformed set of embeddings that align with the desired features or tasks, providing a meaningful and interpretable representation in the new space.

In some embodiments, the system may label the first set of embeddings, based on mapping the first set of embeddings to the second set of embeddings, to generate a labeled set of embeddings. The system may use the mapping to transform new embeddings from the first set into the corresponding embeddings in the second set. These transformed embeddings are then compared with the pre-labeled second set embeddings. The system identifies the closest matching embeddings from the second set, typically using a similarity measure, such as cosine similarity or Euclidean distance. After identifying the closest matches, the system assigns the corresponding labels from the second set to the first set embeddings. This process effectively labels each embedding from the first set with one or more human-definable descriptions derived from the second set. The result is a labeled set of embeddings, where each embedding from the first set is annotated with meaningful categories or features from the second set. This labeling process allows the system to make the first set of embeddings interpretable and actionable by associating them with known categories or features. It is particularly useful in scenarios where the initial embeddings are abstract or complex, and a labeled set of embeddings provides clearer insights and facilitates further analysis or decision-making based on the labeled descriptions.

In some embodiments, mapping the first set of embeddings to the second set of embeddings may comprise the system receiving an objective function and updating coefficients for the first set of embeddings to minimize the objective function. For example, the system may begin by defining an objective function, which quantifies the difference or error between the mapped embeddings and the target embeddings in the second set. This objective function could be based on various criteria, such as mean squared error, cross-entropy, or a more specialized loss function designed for the specific task at hand. Once the objective function is established, the system initializes the coefficients that will be applied to the first set of embeddings. These coefficients could be weights in a neural network or parameters in a simpler linear transformation. The system then computes the initial mapping of the first set of embeddings to the second set by applying the current coefficients. The core of the process is an optimization loop, where the system iteratively updates the coefficients to reduce the value of the objective function. This is typically done using gradient-based optimization methods, such as stochastic gradient descent (SGD), Adam, or other variants. During each iteration, the system calculates the gradient of the objective function with respect to the coefficients, which indicates the direction in which the coefficients should be adjusted to reduce the error. The system updates the coefficients by moving them in the direction that decreases the objective function, effectively improving the alignment between the first and second sets of embeddings. This process continues iteratively, with the coefficients being adjusted after each pass through the data, gradually refining the mapping. As the optimization progresses, the objective function value decreases, indicating that the first set of embeddings is increasingly being transformed in a way that closely aligns with the second set. Once the system reaches a satisfactory level of minimization-typically determined by a convergence criterion or a predefined number of iterations-the process concludes. The resulting coefficients now represent an optimal mapping function that can be applied to new embeddings from the first set to map them effectively to the second set.

In some embodiments, mapping the first set of embeddings to the second set of embeddings may comprise the system retrieving a lasso regression model and minimizing a residual sum of squares (RSS) between coefficients for the first set of embeddings and the second set of embeddings using linear approximation. For example, the system may retrieve or construct a lasso regression model, which is designed to find a linear relationship between the first set of embeddings (as the input features) and the second set of embeddings (as the target outputs). In this context, the first set of embeddings serves as the independent variables, while the second set of embeddings acts as the dependent variables that the system aims to predict or approximate. The lasso regression model introduces a linear approximation by assuming that the second set of embeddings can be expressed as a linear combination of the first set of embeddings, adjusted by a set of coefficients. The goal is to determine these coefficients in a way that minimizes the difference between the predicted embeddings and the actual embeddings in the second set. To achieve this, the system defines a loss function based on the residual sum of squares (RSS), which measures the total squared difference between the predicted embeddings and the true embeddings in the second set. The lasso regression model seeks to minimize this RSS, while also applying an L1 regularization penalty to the coefficients. This regularization term encourages sparsity in the coefficients, meaning that it forces many of them to be zero, effectively selecting only the most relevant features from the first set of embeddings that contribute to the approximation of the second set. The system then iteratively adjusts the coefficients using optimization techniques, such as coordinate descent. During each iteration, the model updates the coefficients in a way that reduces the RSS while balancing the regularization penalty. As the optimization proceeds, the coefficients converge to values that provide the best linear approximation of the second set of embeddings from the first set, subject to the sparsity constraint imposed by the L1 regularization. Once the optimization is complete, the resulting lasso regression model provides a set of coefficients that map the first set of embeddings to the second set of embeddings. These coefficients not only create a linear approximation of the target embeddings, but also highlight which features in the first set are most important, as many coefficients may be zeroed out due to the lasso's feature selection capability.

In some embodiments, mapping the first set of embeddings to the second set of embeddings may comprise the system determining coefficients for the first set of embeddings and the second set of embeddings and minimizing a difference between the coefficients. The system may determine a set of coefficients that define the relationship between the first set of embeddings and the second set. These coefficients represent the weights or importance of each dimension in the embeddings for predicting or approximating the target embeddings in the second set. The system defines a loss function that quantifies the difference between the coefficients of the first set of embeddings and the coefficients required to produce the second set of embeddings. This difference can be measured using various metrics, such as the Euclidean distance or another norm, depending on the specific requirements of the task. The goal of the system is to minimize this difference, effectively making the first set of embeddings as similar as possible to the second set in terms of their linear relationship defined by the coefficients. To minimize this difference, the system employs an optimization algorithm, such as gradient descent, that iteratively adjusts the coefficients for the first set of embeddings. During each iteration, the system calculates the gradient of the loss function with respect to the coefficients and updates them in the direction that reduces the difference between the coefficients of the first and second sets. As the optimization process continues, the system refines the coefficients to minimize the loss function, thereby improving the alignment between the two sets of embeddings. The result is a set of optimized coefficients that map the first set of embeddings to the second set, effectively capturing the relationship between them.

In some embodiments, the system may generate the seed by determining a first embedding based on the first input (e.g., received during a first session). The system may then determine a second embedding based on user profile data, wherein the user profile data is aggregated prior to initiating the first session. The system may then generate a first session seed based on the first embedding and a second session seed based on the second embedding. The system may then use the first session seed and the second session seed to seed an artificial intelligence model. For example, the system generates the seed for an artificial intelligence model by leveraging embeddings derived from both real-time user input and pre-aggregated user profile data. When a first session is initiated, the system processes the first input-such as a user action, query, or interaction with an application-and determines a first embedding. This embedding represents a mathematical vectorization of the input, capturing its semantic meaning and contextual relevance. Simultaneously, the system retrieves and processes pre-aggregated user profile data, which may include historical interactions, preferences, and behavioral patterns, to generate a second embedding that encapsulates long-term user tendencies and attributes.

Once both embeddings are computed, the system generates a first session seed based on the first embedding and a second session seed based on the second embedding. These seeds act as initial conditions that influence how the AI model interprets and processes information within the session. By combining the first session seed and the second session seed, the system seeds the AI model, allowing it to generate responses, predictions, or recommendations that are both contextually relevant to the immediate session and aligned with broader user characteristics. This dual-seeding approach enhances the AI's adaptability, enabling it to deliver more personalized and intelligent outcomes while ensuring continuity across multiple user interactions.

As step 406, process 400 (e.g., using one or more components described above) seeds an artificial intelligence model. For example, the system may seed a first artificial intelligence model with the seed to generate a seeded artificial intelligence model. The system may seed an artificial intelligence model with a seed based on user profile data by embedding specific initial states or contextual information, shaping how the model interprets and generates responses. This process begins with the system aggregating user profile data-such as past interactions, preferences, and behavioral trends-and transforming it into a structured embedding that encapsulates semantic meaning. Instead of using this embedding as a direct input that replaces raw text or other forms of user interaction, the system integrates it at a strategic layer within the model's workflow. This allows the AI model to leverage the semantic richness of pre-processed user data while still dynamically processing real-time inputs.

By incorporating this seed into the model's initialization or hidden state representation, the model can adjust its weights, biases, or attention mechanisms to align with the user's profile before receiving any new input. This method enhances personalization, ensuring that the model generates outputs that are not only responsive to immediate user actions but also informed by broader contextual knowledge. This approach is particularly valuable in applications like conversational model, recommendation engines, and adaptive learning systems, where balancing real-time interaction with long-term personalization leads to more coherent, relevant, and user-specific responses.

In some embodiments, the system may adjust the weights, biases, and/or attention mechanisms of the model to align with the user's profile before receiving any new input by leveraging the seed as an initialization parameter within the model's architecture. This process begins with encoding the user profile data into a structured embedding that captures key behavioral patterns, preferences, and contextual information. The system then integrates this seed into the model's neural network by modifying its initial hidden states, pre-conditioning activation functions, and/or influencing the distribution of attention across input features. In transformer-based models, for example, the seed can be used to bias the attention mechanism by assigning higher relevance to certain token relationships based on prior user interactions. In deep learning models, the seed can initialize specific weight configurations, ensuring that early activations reflect personalized tendencies rather than starting from a neutral or random state. By preloading the model with this contextual awareness, the system can produce more relevant, coherent, and personalized outputs from the very first user interaction, enhancing responsiveness without overriding real-time adaptability.

In some embodiments, the system may use category designations for each seed helps prevent the model from having to disentangle information from different categories. When the embeddings are categorized, the model can easily recognize and process the information based on these predefined labels. This categorization acts as a guiding framework, ensuring that the model can quickly and accurately align the input embeddings with the appropriate contextual and semantic information required for generating outputs. It minimizes the risk of cross-category confusion, where the model might otherwise struggle to separate and correctly interpret overlapping or intertwined information from various categories. By clearly delineating the categories, the model can maintain a clear and organized representation of the input data, leading to more coherent and contextually appropriate outputs.

Improved interpretability and categorization of structured embeddings aid in seeding the model by providing a more transparent, organized, and meaningful foundation for initializing the AI system. When embeddings are better categorized-such as grouping them based on user behavior patterns, preference clusters, or domain-specific contexts-the model can more effectively leverage relevant information while minimizing noise from less pertinent data. Enhanced interpretability ensures that the embeddings retain human-understandable attributes, making it easier to diagnose biases, optimize seed selection, and refine the AI's alignment with user expectations. By structuring embeddings into distinct categories, the system can prioritize certain features over others when adjusting weights, biases, and attention mechanisms, resulting in a more accurate and contextually rich initialization. Additionally, well-categorized embeddings allow for modular seeding, where different aspects of a user's profile-such as interests, historical interactions, and inferred intent-can be selectively integrated based on application needs.

At step 408, process 400 (e.g., using one or more components described above) inputs a first input into a seeded artificial intelligence model. For example, the system may input the first input into a seeded artificial intelligence model to generate a first output. For example, the model processes this input according to its architecture, whether it be a neural network, decision tree, or other types of machine learning models, to generate an output. This output could be a prediction, classification, recommendation, or any other type of result depending on the model's purpose.

In some embodiments, the system may input the first input into the seeded artificial intelligence model to generate the first output by generating a first dataset based on the first input, generating a second dataset based on the seed, appending the first dataset to the second dataset to generate a third dataset, and inputting the third dataset into the seeded artificial intelligence model. Based on this first input, the system generates a first dataset, which is typically a structured representation of the input, such as a table, matrix, or set of embeddings, depending on the nature of the data and the model's requirements. Similarly, the system receives the seed, which may contain additional data, contextual information, or complementary features. The system processes this seed to generate a second dataset, formatted in a way that aligns with the structure of the first dataset. Both datasets are prepared with careful consideration to ensure they are compatible when combined, which might involve standardizing data formats, ensuring consistent feature sets, and applying any necessary preprocessing steps, such as normalization or embedding generation. Once the first and second datasets are generated, the system appends the first dataset to the second dataset, effectively merging them into a third dataset. This third dataset now contains the combined information from both inputs, organized in a manner that allows the second model to process it as a unified set of features. The merging process typically involves concatenating rows or columns, depending on whether the inputs represent different samples or different features of the same samples. After the third dataset is constructed, the system inputs it into the second model. By integrating the first and seeds into a single dataset, the system ensures that the second model has access to all relevant information in a consolidated format, enabling it to make more informed and accurate decisions.

At step 410, process 400 (e.g., using one or more components described above) generates a recommendation based on an output of the seeded artificial intelligence model. For example, the system may generate for display, on a user interface, a first recommendation based on the first output, wherein the first recommendation indicates an interaction outcome of the user and the first computer terminal. The system processes the first output, which could be the result of an interaction between the user and a computer terminal, a network analysis, or another computational task. This output might include data such as user behavior, system performance metrics, or network traffic patterns. The system then interprets this output using predefined rules, algorithms, or a machine learning model trained to recognize patterns and suggest actions. For example, if the first output indicates a decline in network performance, the system might identify potential causes, such as routing inefficiencies or hardware issues, and generate a network routing recommendation to address the problem. If the output relates to user interaction, such as frequent access to specific applications, the system might recommend shortcuts, customizations, or optimizations to enhance the user experience.

Once the recommendation is formulated, the system formats it for display on the user interface. This involves converting the technical details into clear, concise language that the user can easily understand. The recommendation might include a brief explanation of the identified issue or opportunity, along with suggested actions or changes. For example, the interface might display a message like, "We've noticed a slowdown in your network. Consider rerouting traffic through Server B to improve performance," or "You frequently use Application X. Would you like to add a shortcut to your desktop?" The system may ensure the recommendation is prominently displayed on the user interface, possibly with visual cues, like icons or alerts, to draw attention. The user can then review the recommendation and take the suggested action directly through the interface, or they might be guided through a process to implement the changes.

In some embodiments, the system may generate for display the first recommendation based on the first output by determining a first rationale for the first recommendation based on the labeled set of embeddings and generating for display, in the user interface, the first rationale. For example, using the insights gained from the mapping, the system determines a first rationale for the recommendation. This rationale is a clear and concise explanation that links the first output to the recommendation by highlighting the key factors or patterns identified through the embeddings. For example, if the recommendation is to reroute network traffic, the rationale might state, "This recommendation is based on detected latency issues linked to high traffic volumes on your current network path, as identified by the corresponding embedding." The system then generates the first recommendation, integrating this rationale to ensure that the user understands the reasoning behind the suggestion. Both the recommendation and the rationale are formatted for display on the user interface. The rationale is presented alongside the recommendation, providing context and transparency, so the user can make an informed decision. For instance, the user interface might display, "Recommendation: Reroute traffic through Server B. Rationale: Based on recent traffic patterns and latency detected in your current network path, rerouting is expected to enhance performance by reducing bottlenecks." This combined display of the recommendation and rationale not only guides the user toward an action but also builds trust by making the system's decision-making process clear and understandable. By linking the recommendation to a well-defined rationale derived from the labeled embeddings, the system ensures that users receive actionable insights that are both relevant and transparent, fostering confidence in the system's guidance and improving overall user experience.

It is contemplated that the steps or descriptions of FIG. 4 may be used with any other embodiment of this disclosure. In addition, the steps and descriptions described in relation to FIG. 4 may be done in alternative orders, or in parallel, to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 4.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method for using non-natural language embeddings to generate natural language outputs with improved precision using categorized seeding.
2. The method of the preceding embodiment, further comprising: initiating a first session between a user and a first application, wherein the first session comprises a first input; generating a seed based on user profile data that is aggregated prior to initiating the first session; seeding a first artificial intelligence model with the seed to generate a seeded artificial intelligence model; inputting the first input into the seeded artificial intelligence model to generate a first output; and generating for display, on a user interface, a first recommendation from the seeded artificial intelligence model based on the first output.
3. The method of any one of the preceding embodiments, wherein generating the seed based on the user profile data that is aggregated prior to initiating the first session further comprises: retrieving a first artificial intelligence model, wherein the first artificial intelligence model is a deep learning model, wherein the deep learning model is trained on a first training data set to generate a first set of embeddings, and wherein the first training data set comprises historic user data that is generated based on monitoring data processing requests across a plurality of computer networks; retrieving a second set of embeddings, wherein each embedding in the second set of embeddings is labeled to correspond to one or more respective human-definable descriptions, and wherein the one or more respective human-definable descriptions correspond to known user profile data categories; mapping the first set of embeddings to the second set of embeddings; and labeling the first set of embeddings based on mapping the first set of embeddings to the second set of embeddings to generate a labeled set of embeddings.
4. The method of any one of the preceding embodiments, wherein generating for display the first recommendation based on the first output further comprises: determining a first rationale for the first recommendation based on the labeled set of embeddings; and generating for display, in the user interface, the first rationale.
5. The method of any one of the preceding embodiments, wherein mapping the first set of embeddings to the second set of embeddings comprises: receiving an objective function; and updating coefficients for the first set of embeddings to minimize the objective function.
6. The method of any one of the preceding embodiments, wherein mapping the first set of embeddings to the second set of embeddings comprises: retrieving a lasso regression model; and minimizing a residual sum of squares (RSS) between coefficients for the first set of embeddings and the second set of embeddings using linear approximation.
7. The method of any one of the preceding embodiments, wherein mapping the first set of embeddings to the second set of embeddings comprises: determining coefficients for the first set of embeddings and the second set of embeddings; and minimizing a difference between the coefficients.
8. The method of any one of the preceding embodiments, wherein retrieving the second set of embeddings further comprises: determining a first size of the first set of embeddings; and determining a second size of the second set of embeddings based on the first size.
9. The method of any one of the preceding embodiments, wherein retrieving the second set of embeddings further comprises: determining a first size of the user profile data; and determining a second size of the second set of embeddings based on the first size.
10. The method of any one of the preceding embodiments, wherein retrieving the second set of embeddings further comprises: receiving a user input; and determining a size of the second set of embeddings based on the user input.
11. The method of any one of the preceding embodiments, wherein mapping the first set of embeddings to the second set of embeddings further comprises: determining a proxy set of embeddings for the first set of embeddings; and using the proxy set of embeddings to generate the first output.
12. The method of any one of the preceding embodiments, wherein inputting the first input into the seeded artificial intelligence model to generate the first output further comprises: generating a first dataset based on the first input; generating a second dataset based on the seed; appending the first dataset to the second dataset to generate a third dataset; and inputting the third dataset into the seeded artificial intelligence model.
13. The method of any one of the preceding embodiments, wherein generating for display, on a user interface, the first recommendation based on the first output further comprising: retrieving a plurality of recommendations; and selecting the first recommendation from the plurality of recommendations based on the first output.
14. The method of any one of the preceding embodiments, wherein generating for display, on the user interface, the first recommendation from the seeded artificial intelligence model based on the first output further comprising: retrieving a large language model; and inputting the first output into the large language model.
15. The method of any one of the preceding embodiments, wherein generating for display, on the user interface, the first recommendation from the seeded artificial intelligence model based on the first output further comprising: generating a first embedding based on the first output; and determining the first recommendation based on the first embedding.
16. One or more non-transitory, computer-readable mediums storing instructions that, when executed by a data processing apparatus, cause the data processing apparatus to perform operations comprising those of any of embodiments 1-15.
17. A system comprising one or more processors; and memory storing instructions that, when executed by the processors, cause the processors to effectuate operations comprising those of any of embodiments 1-15.
18. A system comprising means for performing any of embodiments 1-15.

## Claims

1. A system using network profile data to seed network determinations, the system comprising:
receiving a request for a network route across a first computer network for a first data processing request;
determining network profile data for the first computer network;
generating a first input based on the network profile data;
generating a seed based on a labeled set of embeddings, wherein the labeled set of embeddings by are generated by:
retrieving a first artificial intelligence model, wherein the first artificial intelligence model is a deep learning model for determining network routes, wherein the deep learning model is trained on a first training data set to generate a first set of embeddings, and wherein the first training data set comprises historic network traffic data that is generated based on monitoring data processing requests across a plurality of computer networks;
retrieving a second set of embeddings, wherein each embedding in the second set of embeddings is labeled to correspond to one or more respective human-definable descriptions, wherein the one or more respective human-definable descriptions correspond to known network issues;
mapping the first set of embeddings to the second set of embeddings; and
labeling the first set of embeddings based on mapping the first set of embeddings to the second set of embeddings to generate a labeled set of embeddings;
seeding the first artificial intelligence model with the seed to generate a seeded artificial intelligence model;
inputting the first input into the seeded artificial intelligence model to generate a first output; and
generating for display, on a user interface, a first recommended network route for the first data processing request based on the first output.

2. A method for using non-natural language embeddings to generate natural language outputs with improved precision using categorized seeding, the method comprises:
initiating a first session between a user and a first application, wherein the first session comprises a first input;
generating a seed based on user profile data that is aggregated prior to initiating the first session;
seeding a first artificial intelligence model with the seed to generate a seeded artificial intelligence model;
inputting the first input into the seeded artificial intelligence model to generate a first output; and
generating for display, on a user interface, a first recommendation from the seeded artificial intelligence model based on the first output.

3. The method of claim 2, wherein generating the seed based on the user profile data that is aggregated prior to initiating the first session further comprises:
retrieving a first artificial intelligence model, wherein the first artificial intelligence model is a deep learning model, wherein the deep learning model is trained on a first training data set to generate a first set of embeddings, and wherein the first training data set comprises historic user data that is generated based on monitoring data processing requests across a plurality of computer networks;
retrieving a second set of embeddings, wherein each embedding in the second set of embeddings is labeled to correspond to one or more respective human-definable descriptions, and wherein the one or more respective human-definable descriptions correspond to known user profile data categories;
mapping the first set of embeddings to the second set of embeddings; and
labeling the first set of embeddings based on mapping the first set of embeddings to the second set of embeddings to generate a labeled set of embeddings.

4. The method of claim 3, wherein generating for display the first recommendation based on the first output further comprises:
determining a first rationale for the first recommendation based on the labeled set of embeddings; and
generating for display, in the user interface, the first rationale.

5. The method of claim 3 or 4, wherein mapping the first set of embeddings to the second set of embeddings comprises one or more of:
(a) receiving an objective function; and updating coefficients for the first set of embeddings to minimize the objective function;
(b) retrieving a lasso regression model; and minimizing a residual sum of squares (RSS) between coefficients for the first set of embeddings and the second set of embeddings using linear approximation
(c) determining coefficients for the first set of embeddings and the second set of embeddings; and minimizing a difference between the coefficients; and
(d) determining a proxy set of embeddings for the first set of embeddings; and using the proxy set of embeddings to generate the first output.

6. The method of any one of claims 3 to 5, wherein retrieving the second set of embeddings further comprises one or more of:
(a) determining a first size of the first set of embeddings; and determining a second size of the second set of embeddings based on the first size;
(b) determining a first size of the user profile data; and determining a second size of the second set of embeddings based on the first size; and
(c) receiving a user input; and determining a size of the second set of embeddings based on the user input.

7. The method of any one of claims 2 to 6, wherein inputting the first input into the seeded artificial intelligence model to generate the first output further comprises:
generating a first dataset based on the first input;
generating a second dataset based on the seed;
appending the first dataset to the second dataset to generate a third dataset; and
inputting the third dataset into the seeded artificial intelligence model.

8. The method of any one of claims 2 to 7, wherein generating for display, on a user interface, the first recommendation based on the first output further comprising:
retrieving a plurality of recommendations; and
selecting the first recommendation from the plurality of recommendations based on the first output.

9. The method of any one of claims 2 to 8, wherein generating for display, on the user interface, the first recommendation from the seeded artificial intelligence model based on the first output further comprising:
retrieving a large language model; and
inputting the first output into the large language model.

10. The method of any one of claims 2 to 9, wherein generating for display, on the user interface, the first recommendation from the seeded artificial intelligence model based on the first output further comprising:
generating a first embedding based on the first output; and
determining the first recommendation based on the first embedding.

11. One or more non-transitory, computer-readable media, comprising instructions that, when executed by one or more processors, cause operations comprising:
initiating a first session between a user and a first application, wherein the first session comprises a first input, and wherein the first application comprises a first artificial intelligence model trained to processing labeled natural language inputs to generate labeled natural language outputs;
in response to initiating the first session:
determining a first embedding based on the first input;
determining a second embedding based on user profile data, wherein the user profile data is aggregated prior to initiating the first session;
generating a first session seed based on the first embedding;
generating a second session seed based on the second embedding;
seeding the first artificial intelligence model with the first session seed and the second session seed to generate a seeded artificial intelligence model;
inputting the first input into the seeded artificial intelligence model to generate a first output; and
generating for display, on a user interface, a first recommendation from the seeded artificial intelligence model based on the first output.

12. The one or more non-transitory, computer-readable media of claim 11, wherein inputting the first input into the seeded artificial intelligence model to generate the first output further comprises:
generating a first dataset based on the first input;
generating a second dataset based on the seed;
appending the first dataset to the second dataset to generate a third dataset; and
inputting the third dataset into the seeded artificial intelligence model.

13. The one or more non-transitory, computer-readable media of claim 11 or 12, wherein generating for display, on a user interface, the first recommendation based on the first output further comprising:
retrieving a plurality of recommendations; and
selecting the first recommendation from the plurality of recommendations based on the first output.

14. The one or more non-transitory, computer-readable media of any one of claims 11 to 13, wherein generating for display, on the user interface, the first recommendation from the seeded artificial intelligence model based on the first output further comprising:
retrieving a large language model; and
inputting the first output into the large language model.

15. The one or more non-transitory, computer-readable media of any one of claims 11 to 14, wherein generating for display, on the user interface, the first recommendation from the seeded artificial intelligence model based on the first output further comprising:
generating a first embedding based on the first output; and
determining the first recommendation based on the first embedding.
